# EUROPEAN PATENT APPLICATION

(11) **EP 3 040 217 A1**
(43) Date of publication of application: **06.07.2016**
(21) Application number: 14307195.9
(22) Date of filing: 29.12.2014
(51) Int. Cl.: B60C 11/14, B60C 9/00

(54) **Tire having a tread with inserted fibers**

(71) Applicant: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventor: The designation of the inventor has not yet been filed
(74) Representative: Bauvir, Jacques

(57) **Abstract**

A tire (1) comprises a pair of opposing bead portions (4); a pair of opposing sidewall portions (3), each sidewall portion connected to one of the respective bead portions; a crown portion (2) extending axially between and connecting the opposing sidewall portions (3), the crown portion (2) including a tread portion (5) having inserted fibers (20); the tire comprises also at least one carcass ply (6) extending between the bead portions and through the crown portion and opposing sidewall portions; and a belt reinforcement structure (7) positioned in the crown portion (2) at a position radially inward of the tread portion (5) and radially outward of the carcass (6); in the illustrated example, the tread (5) has four main circumferential ribs (8, 9, 10 and 11) defined by circumferential grooves (12, 13 and 14), wherein the four ribs comprise fibers (20) regularly inserted in the tread (5), wherein projection of the inserted fibers (20) on an equatorial plane have inclination angles in a range of 10 to 55 degrees relative to the radial direction.

## Description

### Field of the invention

Tires in use wear in a host of ways. One negative manner in which tires, especially truck tires, may wear is in an irregular fashion. When this phenomenon happens, the tread of the tire may become unusable, forcing the user to replace the tire, which is undesirable. This patent application poses a new and useful way of preventing irregular wear involving the use of inserted fibers precisely placed and distributed in the tread.

### Prior art

Many nominally ribbed tires, such as truck steer and trailer tires for example are subject to irregular wear, which is often characterized by local depressions. Irregular wear is a frequent cause for tires to be removed from service. Accordingly, several design features have been used in the prior art to help prevent irregular wear including microsiping in the outside or shoulder areas of the ribs, providing sipes that are directionally oriented and providing for sacrificial shoulder ribs.

US 6,488,064 B1 discloses for instance sacrificial ribs for improved tire wear. US 2012/0035756 A1 presents a method of adding slits or sipes to the tire in order to alter the longitudinal compliance of the tire.

These features are effective, but introduce performance compromises. For instance, sacrificial ribs and microsipes are more prone to aggression damage.

US 5,896,905 discloses the use of incisions or sipes inclined with respect to the normal to the surface of the tread by an angle of between 5 and 25 degrees on ribs or blocks of truck tires. These incisions have as drawbacks a weakening of the tread pattern and a decrease of the wear resistance.

EP 1 213 130 A1 discloses a tire with a tread having injected fibers precisely placed and distributed in a specific controlled pattern and extending in the radial direction of the tire. These injected fibers allow varying the level of reinforcement in different parts of the tread.

An objective of the invention is to poses a new and useful way of preventing irregular wear involving the use of inserted fibers precisely placed and distributed in the tread.

### Summary of the invention

The above objective is accomplished according to the present invention by providing a tire defining radial axial and circumferential directions, the tire comprising:
a pair of opposing bead portions;
a pair of opposing sidewall portions, each sidewall portion connected to one of the respective bead portions;
a crown portion extending axially between and connecting the opposing sidewall portions, the crown portion including a tread portion having inserted fibers;
at least one carcass ply extending between the bead portions and through the crown portion and opposing sidewall portions; and
a belt reinforcement structure positioned in the crown portion at a position radially inward of the tread portion and radially outward of the carcass ply;
wherein projection of the inserted fibers on an equatorial plane have inclination angles in a range of 10 to 55 degrees relative to the radial direction.

Advantageously, the projection of inserted fibers on a meridian plane is inclined relative to the direction perpendicular to the ground surface of the ribs with angles in a range of +- 5 degrees.

The inclination of projection of the inserted fibers on an equatorial plane is preferably in a range of 40 to 50 degrees. This allows a maximum efficiency of the fibers with regard to creation of a coupling force Fx. Under 40 degrees, the efficiency for the coupling force Fx is decreased ans also the fibers can be too stressed, over 50 degrees, the length of each inserted fiber is too long without any increased efficiency.

As a consequence of the presence of these inserted fibers with a high angulation relative to the radial direction, when rolling the tire experiences an additional global circumferential coupling force Fx which can be designed to limit the onset of irregular wear.

According to an embodiment, the tread having two shoulder parts and a central part, the inserted fibers are regularly inserted in the ribs or blocks of the shoulder parts.

The fibers can further be regularly inserted in the ribs or blocks of the central part.

According to an embodiment, the inserted fibers are full tread depth.

According to another embodiment, the inserted fibers extend radially inside the tread over 50 % of the total tread depth and preferably, less than 80 % of the total tread depth.

The fiber volume fraction of preferably superior to 0.1 %. This allows a significant effect on the coupling force.

The volume fraction of the inserted fibers is advantageously between 0.15 and 2.0 %. Over 2.0 %, the effect of the inserted fibers on the wear resistance of the tread can be significant and also the additional time to insert the fibers too long.

According to an embodiment, the inserted fibers are macrofibers with a diameter in the range of 0.1 to 2.0 mm.

Preferably, the inserted fibers are monofilaments.

According to another embodiment, the inserted fibers are bundles of monofilaments. Preferably, the number of monofilaments in a bundle is in the range of 2 to 6.

According to a preferred embodiment, the bundles of monofilaments are twisted.

The twisted bundles of inserted fibers have the advantage of stabilizing more efficiently the value of the coupling circumferential force Fx.

The number of turns per meter can be comprised in a range of 30 to 300 in one direction.

Preferably, the fibers are dipped monofilaments. This improves the adhesion with the tread material and concurs also to a more stabilized and longer efficiency of the fibers.

The inserted fibers can be chosen in the group of aliphatic polyamide, semi-aromatic polyamide, polyacrylonitrile, polyimide, polysulphone, polyethersulphone, polyvinyl alcohol and polyester fibers and their mixtures.

Preferably, the inserted fibers are selected from the group of polyethylene terephthalate (PET) fibers, polybutylene terephthalate (PBT) fibers, polyethylene naphthalate (PEN) fibers and their mixtures.

According to another embodiment, the inserted fibers are selected from the group of aliphatic and semi-aromatic polyamide.

The main advantage of treads and of tires according to the invention is to obtain an efficient coupling Fx/Fz without the drawbacks of weakening of the tread pattern and decrease of the wear resistance of the solution of US 5,896,905. This efficient coupling provides a clear benefit with regards to irregular wear performance.

### Brief description of the drawings

A full and enabling disclosure of the present subject matter, directed to one of ordinary skill in the art, is set forth in the specification, which make reference to the appended figures, in which:
- FIG. 1 discloses a radial cross section of a tire according to an object of the invention;
- FIGS. 2 and 3 are diagrams showing the inclination of the fibers as a function of the resultant force in the contact patch between the tire and the ground;
- FIG. 4 is a partial top view of a rib with an embodiment of inserted fibers;
- FIG. 5 is a partial top view of a rib with another embodiment of inserted fibers;
- FIG. 6 is an illustration of an inserted fiber;
- FIG. 7 is an illustration of an embodiment of a bundle of inserted fibers;
- FIG. 8 is an illustration of another embodiment of a bundle of inserted fibers;
- FIGS. 9 and 10 are illustrations in transversal cross view two examples of bundles of macro fibers;
- FIG. 11 illustrates the evolution of coupling forces with mileage; and

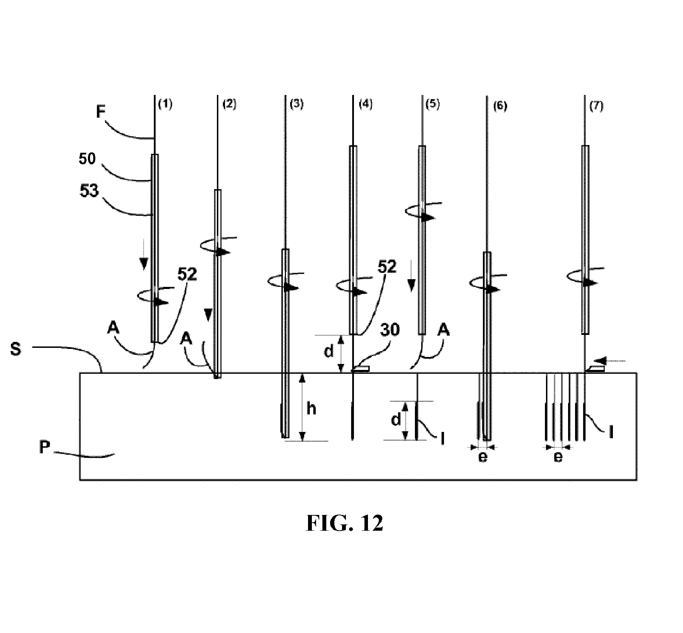

- FIG. 12 describes the various phases of the cycle of embedding a fiber I with an inserting device.

### Detailed description of the invention

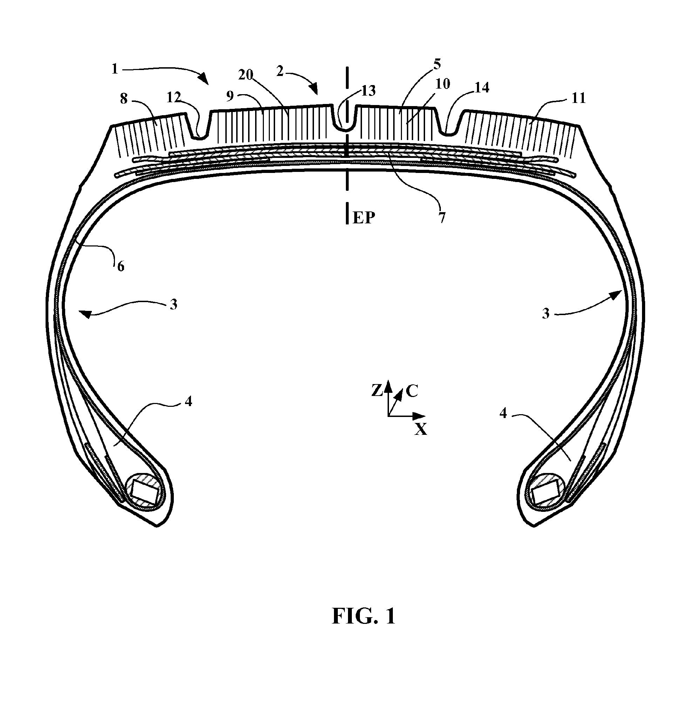

With reference to FIG. 1, a tire 1 is illustrated which has been made with a fiber inserted tread 5 according to an object of the invention.

FIG. 1 illustrates the axial Y, radial Z and circumferential X directions defined by the tire 1. The equatorial plane EP, i.e. a plane comprising directions X and Z and normal to the axial direction Y is also indicated.

The tire 1 comprises a pair of opposing bead portions 4; a pair of opposing sidewall portions 3, each sidewall portion connected to one of the respective bead portions; a crown portion 2 extending axially between and connecting the opposing sidewall portions 3, the crown portion 2 including a tread portion 5 having inserted fibers 20; the tire comprises also at least one carcass ply 6 extending between the bead portions and through the crown portion and opposing sidewall portions; and a belt reinforcement structure 7 positioned in the crown portion 2 at a position radially inward of the tread portion 5 and radially outward of the carcass ply 6. In the illustrated example, the tread 5 has four main circumferential ribs 8, 9, 10 and 11 defined by circumferential grooves 12, 13 and 14.

According to an object of the invention, the four ribs comprise fibers 20 regularly inserted in the tread 5. These fibers are seen as projections in the radial cross section. These projection of these fibers are substantially oriented radially or substantially normal to the ground surface of the rib. By substantially oriented, is meant with an angle between +/- 5 degrees from the indicated direction.

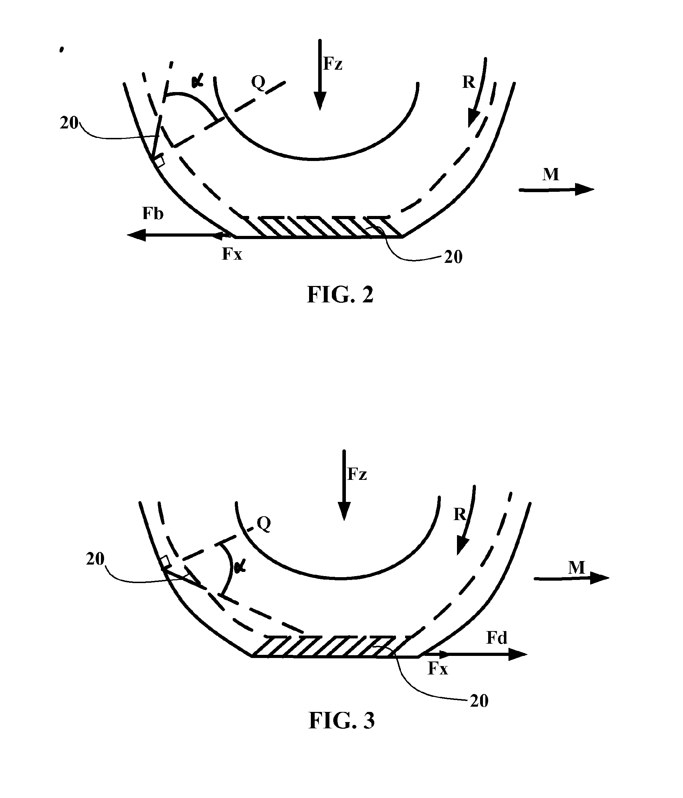

The FIGS. 2 and 3 show the direction of inclination of the fibers 20 for non-driving and drive axles respectively. They are all inclined with respect of the direction normal to the rib surface Q by an angle α equal to 45 degrees in the case considered.

M designates the direction of forward travel of the equipped vehicle, R the direction of rotation of the tire, Q the direction normal to the ground surface of the rib, Fz the normal load on the tire and F the resultant force exerted by the ground on the tread in the contact patch.

The inclination of the fibers 20 involves when a normal load Fz is applied to the tire the appearance of a coupling force Fx. The efficiency of the coupling force is indicated by the ratio Fx/Fz.

When rolling as illustrated in FIGS. 2 and 3, the coupling force Fx is preferably oriented in the same direction as the force F, resultant of the ground in the contact patch, in order to act against the onset of irregular wear.

Accordingly, in FIG. 2, the force F is a braking force Fb the direction of which is opposite to the direction of travel of the vehicle and the tire is therefore a load-bearing tire.

In FIG. 3, the force F is a driving force Fd and the fibers 20 are inclined in the direction of travel of the vehicle and opposite to the direction of FIG. 2. The tire such mounted on the vehicle axle is to be used on a drive axle.

In these FIGS., the fibers are inserted from the ground surface to the bottom of the tread compound, they are full tread depth. However, it is also possible to place them from the ground surface to at least half of the tread depth. It is also possible to place them from the bottom of the tread not until the ground surface.

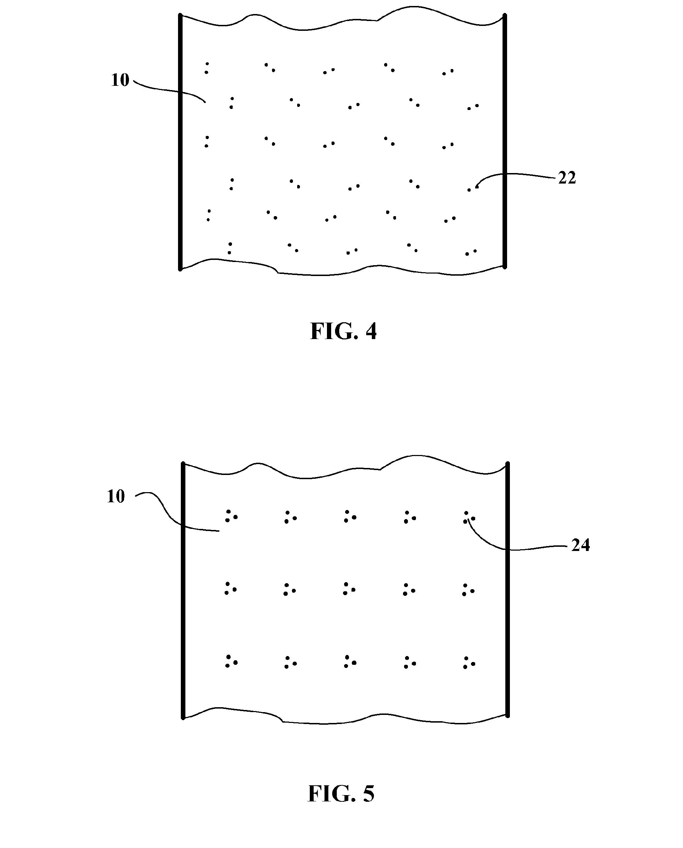

FIG. 4 and 5 illustrate top views of ribs 10 with two embodiments of fibers 22, 24, according to objects of the invention. The fibers 22 are bundles of two fibers placed in staggered rows in the rib 10. The fibers 24 are bundles of three fibers placed in rows in the rib 10. The pitch of the rows is between 1 and 15 mm. In FIG. 4, the density of fibers is higher than in FIG.5 but the size of each fiber is lower.

The insertion of fibers can be achieved in an uncured profiled tread using the device disclosed in US 2013/0299547 A1, incorporated by reference. This device allows the insertion of single or bundles of fibers with a pitch between 5 and 16 mm and any inclination with respect of the normal to the tread between 0 and 55 degrees.

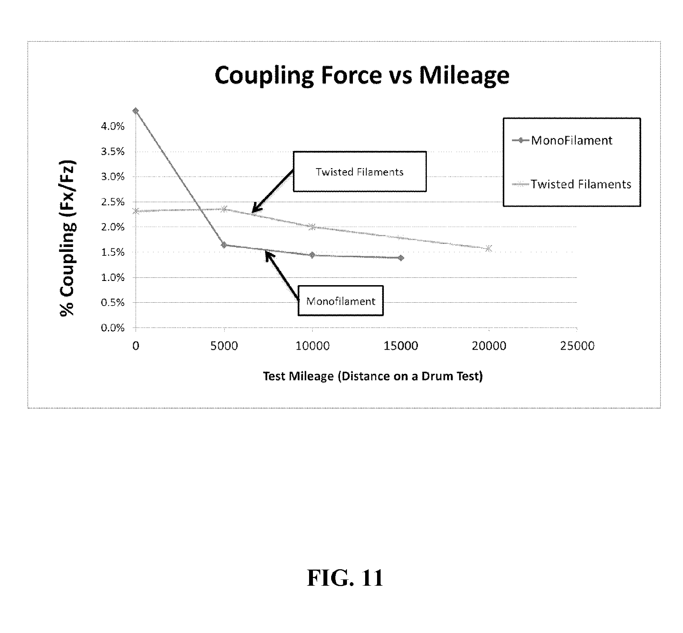

FIG. 11 corresponds to FIG. 4 of US 2013/0299527 A1. It describes the various phases of the cycle of embedding a fiber I with the device.

The main positions of the operating cycle of the device are identified by numerals (1) to (6) placed between parentheses. Each cycle corresponds to the embedding of one fiber I into the profiled element P.

The first position (1) corresponds to the raised position of the needle 50 as it starts its movement towards the lowered position. It will be observed that the free end of the fiber extends beyond the tip 50 of the needle 52 to form a tail A.

The length of the tail A must not be too short, so that the expected effects as the needle rises again are produced. In practice, for the textile fibers usually employed in the tire industry, it will be considered that the length of the tail may usefully be above 2 mm and preferably between 3 mm and 5 mm.

The second position (2) corresponds to the downwards movement of the needle 50 and to the moment at which the tip of the needle pierces the surface S of the rubber profiled element P.

It will be observed that at this precise moment, the tail A is folded back along the needle 50. In this configuration, the fiber is immobilized between the external surface of the needle and the perforation formed in the rubbery profiled element, depriving the fiber of any movement in the direction opposite to the direction of travel of the needle.

The third position (3) corresponds to the lowered position of the needle, in which position the tip of the needle penetrates the profiled element to a given depth h.

The needle then begins a movement of being raised back up from its lowered position to its raised position, illustrated in position (4). The raised position is reached when the tip of the needle is distant from the surface S of the profiled element P by a given and adjustable distance d.

During this raising movement, the free part of the fiber and of the tail A are gripped by the rubbery material of the profiled element, allowing the fiber to be tensioned, and the needle rises up along the fiber which remains fixed with respect to the surface S of the profiled element P.

When the raised position is reached, the blade 30 cuts off the fiber as close as possible to the surface S and releases a tail A which is available for embedding the next fiber I, as is illustrated by position (5).

The length d, which determines the length of the tail A, is adjusted by adjusting the travel limit of a moving support when the latter is in the raised position. The depth h is adjusted by altering the amplitude of the movement of the moving support, and by adjusting the travel limit of the lowered position. The amplitude of the travel of the moving support corresponds to the depth h increased by the length d.

When the tail is cut off, the fiber receives a transverse impulse from the blade 30 of a knife, having the effect of forcing the free end of the fiber constituting the tail to be folded back around the tip 52.

This movement of folding the tail around the tip 52 is enough to immobilize the movement, under the effect of inertia, whereby the fiber rises back up inside the needle as the needle moves between the raised position illustrated at (5) and the position in which the tip again penetrates the surface S of the profiled element P, illustrated at (2).

Throughout the cycle, the needle is rotated by a motor. When the needle is in the raised position and the end of the fiber is not retained by the rubbery material, the needle 50 and the hollow shaft 53 turn about the fiber, without the latter being rotated.

At the moment when the needle penetrates the profiled element, the tail is prevented from rotating by the surface of the channel formed by the needle. The lower edge of the needle around which the tail is folded slides on the fiber without cutting it off, and the tail is driven into the profiled element to the depth h. When the needle is raised again, the fiber is retained by the tail at the bottom of the well formed by the needle, and said needle rises again while turning about the fiber without impairing the properties of the latter.

The result as disclosed in (7) is a row of fibers I placed regularly with a pitch e.

Another solution for inserting fibers in an uncured profile tread of FIG. 1 consists in producing with cylinder-based tool an uncured rubber slab of thickness equal to half-pitch of the rows of fibers, placing single monofilaments or bundles of monofilaments on its surface, covering it with another uncured rubber slab, cutting these slabs at 45 degrees, for example, of the orientation of the fibers, assembling a number of cut bands corresponding to the width of a rib and assembling the uncured ribs with other uncured rubber bands in order to obtain an uncured complete tread profile element ready to be placed on a tire casing. This process is useful to obtain rows of fibers with pitches between 1 and 5 mm.

In order to have a sensitive effect, the volume fraction of the fibers in the ribs of the tread has to be over 0.1 %. This volume fraction can reach 2 %.

The fibers 111 may adopt any known shape, they may for example be elementary monofilaments of large diameter (for example equal to or greater than 0.1 mm), textile folded yarns formed of several fibers straight or twisted together, textile cords formed of several fibers or monofilaments cabled or twisted together.

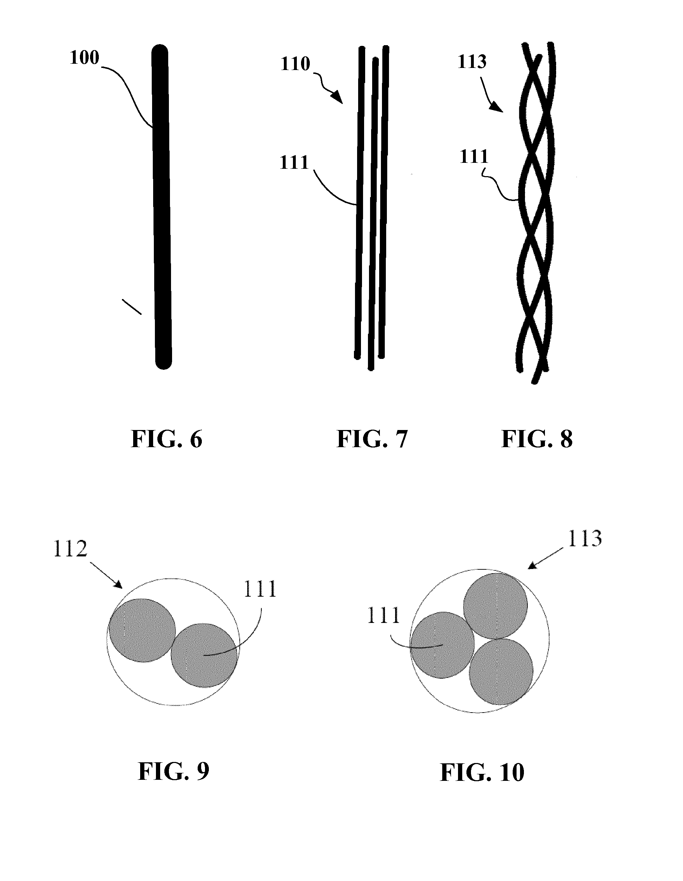

FIGS. 6, 7 and 8 illustrate three embodiments of fibers. FIG. 6 illustrates a single fiber 100, for instance of polyester (PET). Such single macrofilament fiber is usually of a large diameter from 0.4 to 1.0 mm or more.

FIG. 7 shows a bundle of three fibers and FIG. 8 a similar bundle of three fibers twisted.

FIGS. 9 and 10 show in transversal cross section bundles of two 112 and three 113 fibers 111, for instance polyamide aliphatic (nylon 6-6).

The microfilaments are preferably dipped in order to increase the endurance of the coupling and the coating has to be adapted to the composition of the tread compound. Use may be made of any suitable adhesive system, for example a textile glue of the "RFL" (resorcinol-formaldehyde-latex) or equivalent type as far as the textile fibers are concerned,

FIG. 11 discloses results of initial values of the relative coupling force Fx/Fz and its evolution with mileage for two embodiments.

The coupling force Fx can be obtained by several methods. A simple method comprises the steps of mounting a tire and rim assembly on an axle of a device with a plane surface, displacing the assembly normal to the plane surface and towards it until a given radial load Fz and measuring the Fx force, resultant of the forces of the tire on the plane surface with an appropriate measuring cell. The relative coupling force is the ratio Fx/Fz.

It is also possible to obtain this coupling force by numeric simulation.

The first embodiment of fiber is a PET monofilament fiber 100 with a diameter of 0.45 mm placed with a pitch of 8 mm and a volume fraction of 0.14 %. The initial relative coupling force Fx/Fz is very high, 4.3 %, but it decreases strongly after 5 000 kms.

The second embodiment is a nylon 6-6 bundle 113 of three macrofilament fibers 111. Each macrofilament has a diameter of 0.23 mm and the mean envelope diameter of the bundle is 0.45 mm. The envelope diameter means, in the usual way, the diameter of the imaginary cylinder of revolution that surrounds such bundle of fibers in the general case of these fibers not being of circular cross section (contrary to the simple case of individual filaments). These fibers are twisted with a number of turns per meter of 50 and are RFL dipped. The pitch and volume fraction are similar.

In spite of the similar overall diameter, this second embodiment gives an inferior initial coupling force Fx/Fz, 2.3%, but this coupling force is much more stabilized with mileage. This is due to the fact that with a single macrofilament, this fiber is strongly stressed in compression during rolling and degrades quickly. The decrease of the coupling force with mileage can also be associated with interfacial failure between fiber and rubber. On the other hand, the twisted bundle of fibers is more preserved.

In order to have a still better endurance of the bundles of fibers, it is possible to use bundles of two or three macro filaments of PET or nylon with a smaller pitch between 1 and 2 mm and with a smaller diameter of the macrofilaments of 0.1 to 0.2 mm.

Five ribbed tires have been made with and without fibers inserted in the ribs. The tires having PET fibers as previously described present a very large improvement in irregular wear performance.

Those skilled in the art will be able to determine suitable associations of macrofilaments bundles of fibers in terms of diameter, insertion pitches and volume fraction in order to obtain an efficient and longstanding coupling force.

The tires with inserted fibers can be ribbed or having blocks.

While preferred embodiments of the invention have been described using specific terms, such description is for illustrative purposes only, and it is to be understood that changes and variations may be made without departing from the spirit or scope of the following claims.

## Claims

1. A tire defining radial, axial and circumferential directions, the tire comprising:
a pair of opposing bead portions;
a pair of opposing sidewall portions, each sidewall portion connected to one of the respective bead portions;
a crown portion extending axially between and connecting the opposing sidewall portions, the crown portion including a tread portion having inserted fibers;
at least one carcass ply extending between the bead portions and through the crown portion and opposing sidewall portions; and
a belt reinforcement structure positioned in the crown portion at a position radially inward of the tread portion and radially outward of the carcass ply;
wherein projection of the inserted fibers on an equatorial plane have inclination angles in a range of 10 to 55 degrees relative to the radial direction.

2. A tire as in claim 1, wherein projection of inserted fibers on an equatorial plane is inclined relative to the radial direction with angles in a range of 40 to 50 degrees.

3. A tire as in any one of the preceding claims, wherein the inserted fibers are macro fibers with a diameter in the range of 0.1 to 2.0 mm.

4. A tire as in claim 3, wherein the inserted fibers are monofilaments.

5. A tire as in claim 3, wherein the inserted fibers are bundles of monofilaments.

6. A tire as in claim 5, wherein the number of monofilaments in a bundle in in the range of 2 to 6.

7. A tire as in anyone of claims 5 and 6, wherein the bundles of monofilaments are twisted.

8. A tire as in claim 7, wherein the fibers are twisted with a number of turns per meter comprised in a range of 30 to 300 in one direction.

9. A tire as in anyone of claims 3 to 8, wherein the fibers are dipped monofilaments.

10. A tire as of any of the preceding claims, wherein, the tread having two shoulder parts and a central part, the inserted fibers are regularly inserted in the ribs or blocks of the shoulder parts.

11. A tire as of claim 10, wherein the inserted fibers are further regularly inserted in the ribs or blocks of the central part.

12. A tire as of any of the preceding claims, wherein the inserted fibers extend radially inside the tread over 50 % of the total tread depth and preferably are full tread depth.

13. A tire as of any of the preceding claims, wherein the fibers are placed in the ribs or the blocks of the tread in staggered rows.

14. A tire as of any of the preceding claims, wherein the fiber volume fraction is superior to 0.1 %.

15. A tire as of claim 14, wherein the fiber volume fraction is between 0.15 and 1.0 %.

16. A tire as in any one of the preceding claims, wherein the inserted fibers are chosen in the group of aliphatic polyamide, semi-aromatic polyamide, polyacrylonitrile, polyimide, polysulphone, polyethersulphone, polyvinyl alcohol and polyester fibers and their mixtures.
